# EUROPÄISCHE PATENTANMELDUNG

(11) **EP 4 108 472 A1**
(43) Veröffentlichungstag der Anmeldung: **28.12.2022**
(21) Anmeldenummer: 21181388.6
(22) Anmeldetag: 24.06.2021
(51) Int. Cl.: B44C 1/24, B44C 5/04, G01N 21/88, G03B 27/00, B41F 3/00, B41J 11/00, B41F 33/00

(54) **VERFAHREN ZUM BEARBEITEN VON DEKORPAPIEREN**

(71) Anmelder: Swiss Krono TEC AG, 6004 Luzern (CH)
(72) Erfinder: Pfeiffer, Sabrina, 16866 Kyritz (DE)
(74) Vertreter: Gramm, Lins & Partner Patent- und Rechtsanwälte PartGmbB

(57) **Zusammenfassung**

Die Erfindung betrifft ein Verfahren zum Detektieren von Ausdehnungsabweichungen von Dekoren auf bedruckten Dekorpapieren, wobei das Verfahren folgende Schritte aufweist: Bereitstellen des bedruckten Dekorpapiers auf einem Probentisch, Projizieren einer Soll-Vorlage auf den Probentisch und das bedruckte Dekorpapier derart, dass ein Abstand zwischen wenigstens zwei vorbestimmten Vorlagenelementen der projizierten Soll-Vorlage einem Soll-Abstand zwischen wenigstens zwei vorbestimmten Dekorelementen des Dekors entspricht, Bestimmen von Abweichungen zwischen dem Ist-Abstand der Dekorelemente und dem Abstand zwischen den projizierten Vorlagenelementen.

## Beschreibung

Die Erfindung betrifft ein Verfahren zum Detektieren von Ausdehnungsabweichungen von Dekoren aufgedruckten Dekorpapieren. Die Erfindung betrifft zudem ein Verfahren zum Herstellen von Dekorpapier mit einem Dekor, sowie ein Verfahren zum Verarbeiten eines bedruckten Dekorpapiers, wobei jeweils ein Verfahren zum Detektieren der Ausdehnungsabweichungen verwendet wird. Schließlich betrifft die Erfindung zudem eine Vorrichtung zum Durchführen eines der genannten Verfahren.

Beim Bedrucken von Dekorpapieren kann es durch eine Vielzahl unterschiedlicher Gründe zu Abweichungen der Ausdehnung des bedruckten Papiers kommen. Insbesondere wenn Flüssigkeiten auf das Papier aufgebracht werden, wie dies beispielsweise beim Bedrucken der Fall ist, kann es zu Papierwachstum kommen, wobei das Ausmaß des Wachstums beispielsweise von der Menge der aufgebrachten Flüssigkeit abhängt. Ist diese beispielsweise bei einem Dekor räumlich unterschiedlich und nicht homogen, gilt dies in der Regel auch für das zu erwartende Papierwachstum. Doch nicht nur aufgebrachte Flüssigkeiten, sondern beispielsweise auch die Luftfeuchtigkeit in dem Raum, in dem das Bedrucken stattfindet, die Temperatur und Parameter des verwendeten Rohpapiers, können die Abmessungen und Ausdehnungen des Dekorpapiers beeinflussen. Gleiches gilt im Übrigen auch für vor dem eigentlichen Druckprozess stattfindende Prozesse und Arbeitsschritte, die beispielsweise das Aufbringen einer Grundierung, die auch als Primer bezeichnet wird, und für nach dem eigentlichen Druckprozess stattfindende Prozesse, wie beispielsweise dem Imprägnieren des bedruckten Dekorpapiers.

Insbesondere für den Fall, dass die bedruckten Dekorpapiere in weiteren Arbeitsschritten verarbeitet werden, ist es jedoch wichtig, dass vorgegebene Abmessungen und Ausdehnungen des jeweiligen Dekorpapiers eingehalten werden. Wird das bedruckte Dekorpapier beispielsweise auf einen Festkörper, beispielsweise eine Holzwerkstoffplatte, aufgebracht und auflaminiert, aus dem in einem weiteren Arbeitsschritt einzelne Dielen herausgeschnitten oder herausgesägt werden, ist es notwendig, dass das Dekor, dass dann auf jeder einzelnen Diele angeordnet wird, dem soll Bild entspricht. Oftmals werden derartige Dielen mit einer Struktur in der Oberfläche versehen, die mit dem Dekor kongruent ausgebildet wird, sodass beispielsweise der haptische Eindruck einer Holzdiele nachgebildet wird. Stimmt die Ausdehnung und Abmessung des Dekors nicht mit den Sollwerten überein, kann auch die eingeprägte Struktur nicht den Linien des Dekors folgen und die Illusion kann nicht wirken.

Die Problematik ist aus dem Stand der Technik seit langem bekannt und unterschiedliche Verfahren und Maßnahmen sind vorgeschlagen worden, um dem Problem zu begegnen. Dies betrifft einerseits verschiedene Maßnahmen, wie beispielsweise Trocknungsschritte und die Überwachung der Feuchtigkeit mittels Sensoren, die verwendet werden, um das Ergebnis des Druckprozesses möglichst optimal an die Sollwerte anzupassen und so dafür zu sorgen, dass möglichst kleine Ausdehnungsabweichungen vorliegen. Dennoch ist es von Vorteil und notwendig, das Ergebnis zu überprüfen und Ausdehnungsabweichungen detektieren zu können. Aus der EP 2 318 211 B1 ist dafür ein Verfahren bekannt, bei dem beispielsweise die Breite oder die Länge des Dekors vermessen und mit Sollwerten verglichen wird.

Nachteilig ist, dass ein derartiges Verfahren aufwendig ist und somit meist nicht im regulären Druckprozess stattfinden kann, da dieser eine zu hohe Geschwindigkeit vorgeben würde. Der Erfindung liegt daher die Aufgabe zugrunde, ein Verfahren zum Detektieren von Ausdehnungsabweichungen vorzuschlagen, das schnell und sicher durchführbar ist.

Die Erfindung löst die gestellte Aufgabe durch ein Verfahren zum Detektieren von Ausdehnungsabweichungen von Dekoren auf bedruckten Dekorpapieren, wobei das Verfahren folgende Schritte aufweist:
- Bereitstellen des bedruckten Dekorpapiers auf einem Probentisch,
- Projizieren einer Soll-Vorlage auf den Probentisch und das bedruckte Dekorpapier derart, dass ein Abstand zwischen wenigstens zwei vorbestimmten Vorlagenelementen der projizierten Soll-Vorlage einem Soll-Abstand zwischen wenigstens zwei vorbestimmten Dekorelement des Dekors entspricht,
- Bestimmen von Abweichungen zwischen dem Ist-Abstand der Dekorelemente und dem Abstand zwischen den projizierten Vorlagenelementen.

Zunächst wird also das bedruckte Dekorpapier bereitgestellt und auf einem Probentisch angeordnet. Dieser muss nicht zwangsläufig ein separater Tisch oder eine separate Ablagefläche sein, sondern kann jede Oberfläche sein, auf der das Verfahren durchgeführt werden soll. Vorzugsweise wird das bedruckte Dekorpapier auf diesem Probentisch angeordnet, sodass es sich relativ zu dem Probentisch nicht bewegt. Dies ist von Vorteil, jedoch nicht zwangsläufig notwendig. Es ist auch denkbar, das Verfahren durchzuführen, ohne dass das Dekorpapier zur Ruhe kommt. Der apparative Aufwand steigt jedoch dabei.

Auf den Probentisch mit dem sich darauf befindenden bedruckten Dekorpapier wird nun eine Soll-Vorlage projiziert. Dies bedeutet, dass das Dekorpapier, das sich auf dem Probentisch befindet, in einer bestimmten Weise beleuchtet wird. Diese Beleuchtung, also die Projektion der Soll-Vorlage verfügt über mehrere Vorlagenelemente. Dies können beispielsweise Bildelemente des Dekors, Linien oder Punkte sein. Prinzipiell sind alle Elemente der Soll-Vorlage im Sinne der hier beschriebenen Erfindung als Vorlagenelemente zu bezeichnen. Der Abstand zwischen den Projektionen dieser Vorlagenelemente hängt vom Abstand des Projektor, also der Quelle der Projektion, und dem Dekorpapier auf dem Probentisch ab. Der geometrische Zusammenhang ist bekannt. Es ist somit einfach möglich, den Projektor, aus dem die Soll-Vorlage projiziert wird, soweit vom Probentisch und einem sich darauf befindenden Dekorpapier entfernt anzuordnen, dass der Abstand, der sich zwischen der Projektion zweier Vorlagenelemente auf dem bedruckten Dekorpapier befindet, dem Soll-Abstand entspricht, der zwischen zwei ebenfalls vorbestimmten Dekorelementen des Dekors benötigt und erwartet wird.

Durch die Projektion der wenigstens zwei vorbestimmten Vorlagenelemente ist es nun folglich sehr einfach möglich, zu überprüfen, ob der Abstand zwischen diesen beiden Projektionen der Vorlagenelemente und den beiden vorbestimmten Dekorelementen übereinstimmt oder ob eine Abweichung vorliegt und wie groß diese ist. Dies geschieht im letzten Verfahrensschritt, indem die Abweichung zwischen dem ist-Abstand der Dekorelemente und dem Abstand zwischen den Projektionen der Vorlagenelemente, also den projizierten Vorlagenelementen, ist.

Vorzugsweise entspricht ein Soll-Abstand der Soll-Breite des Dekors und/oder ein Soll-Abstand der Soll-Länge des Dekors. Auf diese Weise wird im letzten Verfahrensschritt bestimmt, inwieweit sich die gesamte Breite und/oder die gesamte Länge des Dekors von den jeweiligen Sollwerten unterscheiden. Besonders bevorzugt entspricht der Soll-Abstand der Soll-Breite einzelner Dielen des Dekors. Soll kann erkannt werden, in welchem Bereich des Dekors ein besonders großes und/oder ein besonders kleines Wachstum stattgefunden hat oder wo sonstige Abweichungen auftreten. In einer bevorzugten Ausgestaltung wird zwischen jeden zwei benachbarten Dielen, die durch das Dekor dargestellt werden, jeweils wenigstens ein Vorlagenelement, bevorzugt eine gerade Linie, projiziert. Dadurch sind die Soll-Stellen der "Fugen" zwischen jeweils benachbarten Dielen dargestellt und es kann ortsaufgelöst erkannt und festgestellt werden, wo die Abweichungen stattgefunden haben.

Vorteilhafterweise beinhalten die Vorlagenelemente Linien, die als Lichtlinien auf das Dekorpapier projiziert werden. Vorzugsweise verlaufen diese Linien paarweise parallel zueinander, sodass ein Abstand zwischen den beiden Linien, also den projizierten Vorlagenelementen besonders einfach ermittelt werden kann. Verfügen die Vorlagenelemente beispielsweise über Linien, deren Abstand in der Projektion, also auf dem Dekorpapier, der Soll-Breite des Dekors entspricht, muss im letzten Verfahrensschritt lediglich ermittelt werden, ob und wenn ja wie weit das tatsächlich gedruckte Dekor über diese beiden Linien hinausragt oder wie groß der Abstand zwischen der tatsächlichen aus Linie des gedruckten Dekors und den beiden Linien ist. Im ersten Fall ist das Dekor breiter als gewünscht und im zweiten Fall schmaler. Unabhängig davon, welche Vorlagenelemente verwendet werden, ist es von Vorteil, das bedruckte Dekorpapier auf dem Probentisch auszurichten. Dabei kommt es insbesondere auf eine Ausrichtung des Dekorpapiers relativ zur Projektion der Soll-Vorlage an. In einer besonders vorteilhaften Ausgestaltung verfügt das Dekor über eine Mittellinie, die sich besonders bevorzugt in Längsrichtung erstreckt. Als besonders vorteilhaft hat sich herausgestellt, wenn dann auch die Soll-Vorlage eine derartige Mittellinie aufweist, sodass die beiden Mittellinien lediglich in Übereinstimmung gebracht werden müssen, um eine möglichst optimale Ausrichtung gewährleisten zu können.

Vorzugsweise beinhaltet die Soll-Vorlage wenigstens einen Teil des Dekors, bevorzugt jedoch das gesamte Dekor. Es ist beispielsweise möglich, dass die Soll-Vorlage den Teil des Dekors beinhaltet, der mit einer der verschiedenen Druckfarben gedruckt wird. Dies können beispielsweise in einer bestimmten Farbe, vorzugsweise schwarz, gedruckte Linien sein. Diese Linien können, müssen jedoch nicht parallel zueinander verlaufen. Vorzugsweise stimmen diese Linien der Soll-Vorlage, die auch als Linien in der Projektion sichtbar sind, bei optimaler Größe des Dekors mit den entsprechenden Linien des Dekors überein. Vorzugsweise erstrecken sich diese Linien über einen möglichst großen Teil des Dekors, bevorzugt über das gesamte Dekor. Auf diese Weise ist es möglich, an vielen unterschiedlichen Stellen des Dekors Abweichungen in der Ausdehnung des Dekors festzustellen und so nicht nur zu ermitteln, ob die gesamte Breite oder die gesamte Länge des Dekors mit den vorgegebenen Soll-Werten übereinstimmt, sondern eine ortsaufgelöste und damit ortsabhängige Abweichung in den Ausdehnungen festzustellen.

Besonders bevorzugt wird das bedruckte Dekorpapier und die projizierte Soll-Vorlage durch einen optischen Sensor erfasst. Dies kann beispielsweise eine Digitalkamera sein, die vorzugsweise sichtbares Licht, Infrarotstrahlung und/oder UV-Strahlung erfasst. Das so ermittelte Kamerabild, das auch als erfasste Werte bezeichnet wird, wird dann einer elektronischen Datenverarbeitungseinrichtung übermittelt, die dann beispielsweise durch eine Bildbearbeitung-Software in der Lage ist, die benötigten Abweichungen zu bestimmen.

Unter einem Projizieren einer Soll-Vorlage wird insbesondere auch das Beleuchten des auf dem Probentisch bereitgestellten Dekorpapiers verstanden, wie dies beispielsweise durch Laser erreicht werden kann.

Die Erfindung löst die gestellte Aufgabe zudem durch ein Verfahren zum Herstellen von Dekorpapiere mit einem Dekor, wobei das Verfahren folgende Schritte aufweist:
- Bereitstellen eines unbedruckten Roh-Papiers,
- Bedruckten des Roh-Papiers mit dem Dekor,
- Detektieren von Ausdehnungsabweichungen des gedruckten Dekore mittels eines Verfahrens der hier beschriebenen Art,
- Bestimmen wenigstens einer Korrekturmaßnahme wenn die detektierte Abweichung größer als ein vorbestimmte Grenzwert ist, und
- Umsetzen der wenigstens einen Korrekturmaßnahme und wiederholende Verfahrensschritte.

Nachdem das Roh-Papier mit dem Dekor bedruckt wurde, wird eine Abweichung in den Ausdehnungen des gedruckten Dekors von den benötigten Soll-Werten ermittelt. Ist diese Abweichung größer als ein vorbestimmter Grenzwert, wird wenigstens eine Korrekturmaßnahme bestimmt. Auch dies kann vorzugsweise durch die elektronische Datenverarbeitungseinrichtung geschehen. So ist es beispielsweise möglich, den Feuchtigkeitsgehalt des Roh-Papiers zu reduzieren oder zu erhöhen, indem ein beispielsweise im Druckprozess vorhandener Trockner entsprechend gesteuert wird und die Trocknerleistung erhöht oder reduziert wird. Dadurch kann das Papierwachstum gesteuert und beeinflusst werden. Dies ist insbesondere dann von Vorteil, wenn, wie oben dargelegt, eine ortsabhängige Abweichung bestimmt wird und ein Trockner in der Lage ist, unterschiedliche Bereiche des Roh-Papiers vor und/oder nach dem Bedruckten mit dem Dekor unterschiedlich stark zu trocknen. Anschließend wird die bestimmte Korrekturmaßnahme umgesetzt. Es bedeutet beispielsweise, dass Produktionsparameter im Druckverfahren, beispielsweise einzelner Arbeitsstationen innerhalb der Druckstraße, wie beispielsweise einem Auftragswerk für eine Grundierung, einem Trockner oder einem Digitaldruckwerk verändert werden. Anschließend werden die Verfahrensschritte wiederholt und ein neues Roh-Papier mit einem Dekor versehen. Damit wird eine möglichst gleichbleibende Qualität der herzustellenden Dekorpapiere gewährleistet.

Die Erfindung löst die gestellte Aufgabe zudem durch ein Verfahren zum Verarbeiten eines bedruckten Dekorpapiers, wobei das Verfahren folgende Schritte aufweist:
- Bereitstellen eines Dekorpapiers, das mit einem Dekor bedruckt ist,
- Detektieren von Ausdehnungsabweichungen des gedruckten Dekors mittels eines hier beschriebenen Verfahrens, und
- Verarbeiten des bedruckten Dekorpapiers mit wenigstens einem weiteren Arbeitsschritt in Abhängigkeit der detektierten Ausdehnungsabweichungen.

In diesem Verfahren werden die detektierten Ausdehnungsabweichungen folglich nicht dazu verwendet, um bei einem nächsten Dekorpapier ein besseres Ergebnis zu erreichen, sondern um in folgenden Arbeitsschritten das bedruckte Dekorpapier, dessen Ausdehnungsabweichungen bestimmt und detektiert wurden, möglichst gut weiter verarbeiten zu können.

Vorzugsweise wird der wenigstens eine weitere Arbeitsschritt in Abhängigkeit der detektierten Abweichungen ausgewählt. So ist es beispielsweise möglich, dass die Abweichung so groß ist, dass zunächst ein zusätzlicher Arbeitsschritt durchgeführt werden muss, bevor die eigentlich vorgesehene Weiterverarbeitung des bedruckten Dekorpapiers möglich ist. Wird beispielsweise das bedruckte Dekorpapier auf einen festen Gegenstand, beispielsweise eine Holzwerkstoffplatte, aufgeklebt oder auflaminiert, ist es notwendig, dass die Maße und Abmessungen, also die Ausdehnung des Dekorpapiers, in einem Toleranzbereich liegt. Auf diese Weise kann durch den zwischengeschobenen Arbeitsschritt, der in Abhängigkeit der detektierten Abweichungen ausgewählt wurde, ein besseres Ergebnis erzielt werden. Alternativ oder zusätzlich dazu werden Arbeitsparameter, die in einem weiteren Arbeitsschritt verwendet werden, in Abhängigkeit der detektierten Abweichungen gewählt. Dies ist auch dann von Vorteil, wenn kein zusätzlicher Arbeitsschritt eingeführt wird, der durch eine große oder kleine Abweichung der Ausdehnung des Dekors vom Soll-Wert nötig wird.

Selbst verständlich kann ein hier beschriebenes Verfahren zum Herstellen von Dekorpapiere in vorteilhafterweise mit einem hier beschriebenen Verfahren zum Verarbeiten eines bedruckten Dekorpapiers kombiniert werden. Selbst verständlich ist es dabei nicht notwendig, das jeweils enthaltene Verfahren zum Detektieren von Ausdehnungsabweichungen doppelt durchzuführen. Vielmehr können die detektierten Ausdehnungsabweichungen einerseits verwendet werden, um die Abweichungen beim nächsten herzustellen Dekorpapier zu reduzieren und andererseits dazu verwendet werden, dass bereits bedruckte Dekorpapier in folgenden Arbeitsschritten möglichst gut und passgenau weiterverarbeiten zu können.

Die Erfindung löst die gestellte Aufgabe zudem durch eine Vorrichtung zum Durchführen eines hier beschriebenen Verfahrens, wobei die Vorrichtung wenigstens einen Probentisch und wenigstens einen Projektor zum Projizieren der Soll-Vorlage auf den Probentisch aufweist. Eine derartige Vorrichtung ist beispielsweise für die Durchführung einer Eingangskontrolle verwendbar, bei der bedruckte Dekorpapiere auf Abweichungen hin überprüft werden, bevor sie einem weiteren Verfahrensschritt zugeführt werden. Ein solcher Verfahrensschritt ist beispielsweise ein Verpressen in einer Presse, beispielsweise einer Kurztaktpresse, in der ein imprägnierte Dekorpapier auf eine Trägerplatte, beispielsweise eine Holzwerkstoffplatte, aufgebracht wird. Eine erfindungsgemäße Vorrichtung kann jedoch auch zwischen zwei Arbeitsschritten, beispielsweise im Drucken und dem Verpacken zum Weitertransport verwendet werden.

Vorzugsweise verfügt die Vorrichtung über wenigstens einen optischen Sensor, besonders bevorzugt über wenigstens eine Kamera, die eingerichtet ist, die auf den Probentisch projizierte Soll-Vorlage und wenigstens einen Teil des Dekors eines auf dem Probentisch liegenden Dekorpapiers zu erfassen. Vorzugsweise ist der optische Sensor eingerichtet, elektromagnetische Strahlung, besonders bevorzugt sichtbares Licht, zu detektieren.

In einer bevorzugten Ausgestaltung verfügt die Vorrichtung über eine elektrische Steuerung, besonders bevorzugt über eine elektronische Datenverarbeitungseinrichtung, die eingerichtet ist, die von dem wenigstens einen optischen Sensor, besonders bevorzugt der Kamera, erfassten Daten auszuwerten und die Abweichungen zu bestimmen.

Vorzugsweise ist die elektrische Steuerung eingerichtet, ein Signal, insbesondere ein optisches und/oder akustisches Signal auszusenden, wenn die bestimmten Abweichungen ein vorbestimmtes Maß überschreiten.

Vorzugsweise ist die elektrische Steuerung eingerichtet, die bestimmten Abweichungen auf einer Anzeigeeinrichtung auszugeben, in einem elektronischen Datenspeicher zu speichern und/oder an eine andere elektrische Steuerung zu übermitteln. Werden die Informationen ausgegeben, beispielsweise auf einem Display, kann ein Bearbeiter oder Benutzer der Vorrichtung die Informationen erfassen und verarbeiten, etwa indem er Produktionsparameter einer vorgelagerten oder nachgelagerten Funktionseinheit an die Abweichungen anpasst.

Bevorzugt ist der wenigstens eine Projektor derart angeordnet, dass der die Soll-Vorlage in einer Richtung senkrecht zu dem Probentisch projiziert. Besonders bevorzugt ist der wenigstens eine Projektor relativ zu dem Probentisch verschiebbar, vorzugsweise senkrecht zu dem Probentisch verschiebbar, angeordnet. Bevorzugt sind der Probentisch und/oder der Projektor senkrecht und/oder parallel und/oder in wenigstens einer anderen Richtung relativ zueinander bewegbar.

In einem ersten Ausführungsbeispiel ist eine derartige Vorrichtung in einer Druckhalle installiert, in der ein Digitaldruckverfahren durchgeführt wird, um Dekorpapiere mit einem Dekor herzustellen. Nach dem eigentlichen Druckvorgang wird ein Rapport, also ein Dekorpapier mit einem Dekor, entnommen und auf einem Tisch, der den Probentisch bildet, ausgerichtet. Der darüber befindliche Beamer erzeugt ein Bild mit den Soll-Werten für die Abmessungen auf dem gedruckten Dekor mit den Ist-Abmessungen. Die Probe, also der entnommene Rapport und das auf diese Weise erzeugte Bild werden anhand des Mittelstrichs ausgerichtet. Der Mittelstrich ist vorzugsweise sowohl im Rapport als auch in der Soll-Vorlage enthalten. Ein Mitarbeiter oder eine elektronische Datenverarbeitungseinrichtung erkennt, dass es zu einer Abweichung kommt, die größer ist, als ein vorbestimmte Grenzwert. Daraufhin wird wenigstens ein Betriebsparameter der Anlage, beispielsweise eine Trocknertemperatur oder eine Bahnspannung der zu bedrückenden Papierbahn aus Roh-Papier angepasst, bis sich das Ergebnis verbessert und die Abweichungen kleiner sind als der vorbestimmte Grenzwert. In einer bevorzugten Ausgestaltung ist auch die Durchführung des Verfahrens direkt in der Digitaldruckanlage möglich, wenn beim Projizieren der Soll-Vorlage auf den Probentisch beispielsweise mit Lasern gearbeitet wird. In diesem Fall ist es von Vorteil, wenn diese lediglich die Dekorbreite projizieren, also die gesamte Breite des Dekors, und so rein visuell beurteilt werden kann, ob die Maße übereinstimmen.

Besonders bevorzugt verfügt das Dekor über die Darstellung mehrerer Dielen, die auch als Paneele bezeichnet werden können. Zwischen diesen Darstellungen wird das mit dem Dekor bedruckte Dekorpapier beispielsweise nachdem es auf eine Trägerplatte aufgebracht wurde, zerteilt, vorzugsweise zersägt. Da es dabei in der Regel zu Materialverlust kommt, beispielsweise durch die Dicke des verwendeten Sägeblattes, verfügt das Dekor an diesen Stellen über Linien, entlang derer die Schnitte ausgeführt werden. Vorzugsweise werden entlang dieser Linien Vorlagenelemente auf das Dekorpapier projiziert. Auf diese Weise können ortsabhängig Abweichungen festgestellt werden, so dass ermittelt werden kann, im Bereich welcher Dielen die Abweichung besonders groß oder besonders klein ist. Es lässt sich feststellen, in welcher Richtung eine Abweichung besonders groß ist. Wird beispielsweise das Dekorpapier von einer Rolle als sogenanntes Endlospapier durch die Druckmaschine bewegt, kann es durch eine zu große Spannung zu einem besonders großen Wachstum in Längsrichtung des Papiers und damit auch des Dekors in dieser Richtung kommen.

In einem anderen Ausführungsbeispiel ist die Vorrichtung in einer Imprägnierhalle installiert. In dieser Halle wird das bedruckte Dekorpapier beispielsweise mit einem Kunstharz imprägniert. In diesem Fall wird vor dem Imprägnieren ein Rapport entnommen und kontrolliert, ob die richtigen Maße nach dem Druck erreicht wurden. So kann die Anlage im Falle von Abweichungen bereits vor der Imprägnierung angepasst werden. Alternativ oder zusätzlich dazu kann auch nach dem Imprägniervorgang ein Rapport entnommen werden und beispielsweise auf einem Tisch mit festem Anschlag ausgerichtet werden. Der darüber befindliche Beamer erzeugt ein Bild mit den Soll-Maßen auf dem gedruckten Bild mit den Ist-Maßen. Der Mitarbeiter oder eine elektronische Datenverarbeitungseinrichtung erkennt, dass es zu einer Abweichung kommt, und kann wenigstens einen Betriebsparameter der Anlage (Trocknertemperatur, Bahnspannung) daraufhin anpassen sofern die Abweichung größer ist als ein vorbestimmte Grenzwert.

In einem weiteren Ausführungsbeispiel ist die Vorrichtung in einer Wareneingangskontrolle installiert. Wenn die imprägnierten Bögen, also das mit einem Dekor bedruckte Dekorpapier an das jeweilige Werk geliefert werden, kann eine Wareneingangskontrolle durchgeführt werden, indem auch hier ein Rapport entnommen wird und auf einem Messtisch ein Soll-Ist-Vergleich durchgeführt wird, indem das Soll-Bild auf die Ist-Probe projiziert wird. So kann bereits hier entschieden werden, ob die Ware angenommen wird oder ob sie reklamiert wird.

Ein weiteres Ausführungsbeispiel sieht vor, dass eine entsprechende Vorrichtung an einer Presse angeordnet ist, in der ein bedrucktes Dekorpapier, das vorzugsweise imprägniert ist, beispielsweise mit einem Kern einer Holzwerkstoffplatte verpresst wird. Vor Beginn der Produktion wird ein Rapport vermessen. Dabei können Abweichungen in der Ausdehnung des Rapportes, die beispielsweise durch eine Feuchtigkeitsaufnahme oder -abgabe hervorgerufen werden können, detektiert werden. Vorzugsweise wird auch nach dem Verpressen ein Rapport entnommen, um zu überprüfen, ob die Ausdehnungsabweichungen weiterhin kleiner sind als ein vorbestimmte Grenzwert. Ist dies nicht der Fall, kann in der Anlage dann noch nachjustiert werden, indem beispielsweise die Ausrichtung und/oder der Druck verändert und angepasst werden, um dann noch eine möglichst gute Ausnutzung zu haben. Sollten die Abweichungen zu groß sein, kann die Produktion dann aber auch rechtzeitig abgebrochen werden, um so Ressourcen zu sparen.

In einem letzten Ausführungsbeispiel wird die Vorrichtung in einer Fußbodenanlage installiert. In dieser werden die verpressten Platten in einzelne Dielen zersägt. Zuvor kann eine Kontrolle einer Platte erfolgen, um festzustellen, ob die Maße eingehalten wurden. Im Falle von Abweichungen kann dann entschieden werden, ob die Weiterverarbeitung abgebrochen wird oder ob durch ein anderes Schnittmuster noch möglichst viele verkaufsfähige Dielen zu erhalten sind. So könnte eine nicht passende Diele in einem mittleren Bereich der Platte verworfen werden, wenn diese dann anders aufgesägt wird, sodass die sich daran anschließende Diele wieder passt.
Mit Hilfe der beigefügten Figuren werden nachfolgend einige Ausführungsbeispiele der vorliegenden Erfindung näher erläutert. Es zeigen:
Figur 1 - die schematische Darstellung einer Vorrichtung gemäß einem Ausführungsbeispiel der vorliegenden Erfindung und
Figuren 2 bis 4- schematische Darstellungen unterschiedlicher Verfahren.

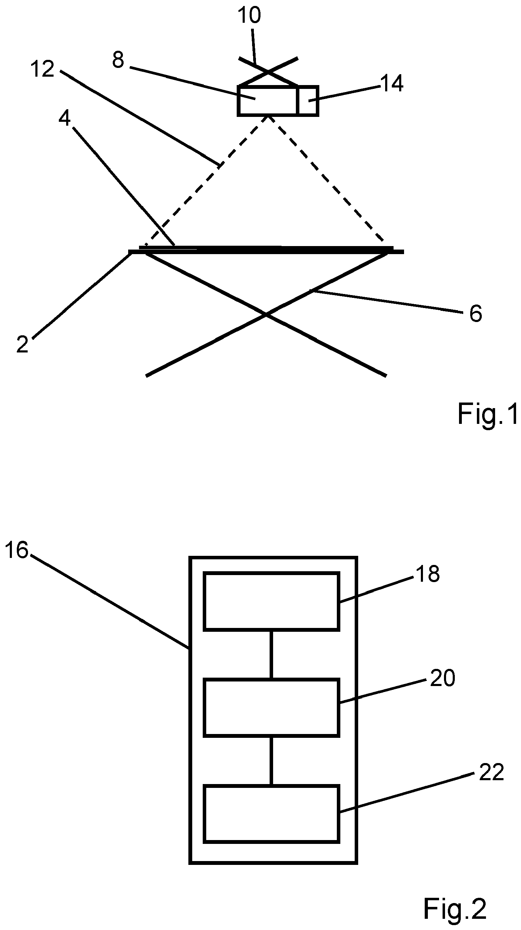

Figur 1 zeigt schematisch eine Vorrichtung gemäß einem ersten Ausführungsbeispiel der vorliegenden Erfindung. Sie verfügt über einen Probentisch 2, auf dem ein Dekorpapier 4 angeordnet ist. Der Probentisch 2 verfügt über eine Höhenverstellung 6, die nur schematisch dargestellt ist. Oberhalb des Probentisches 2 ist ein Projektor 8 angeordnet, der über eine zweite Höhenverstellung 10 verfügt. Über diese Höhenverstellung 10 ist der Projektor 8 beispielsweise an einer Halterung der Vorrichtung oder der Decke einer Produktionshalle befestigt. Sowohl die Höhenverstellung 10 als auch der Projektor 8 sind jedoch vorzugsweise Teile der Vorrichtung. Da sowohl der Probentisch 2 als auch der Projektor 8 über jeweils eine

Höhenverstellung 6, 10 verfügen, lässt sich insbesondere ein Abstand zwischen dem Dekorpapier 4 und dem Projektor 8 genau einstellen.

Der Projektor 8 projiziert entlang des schematisch dargestellten Strahlkegels 12 eine Soll-Vorlage auf das Dekorpapier 4. Im gezeigten Ausführungsbeispiel ist am Projektor 8 eine Kamera 14 angeordnet, die eingerichtet ist, das Dekorpapier 4 und die vom Projektor 8 auf das Dekorpapier 4 projizierte Soll-Vorlage zu erfassen und einer nicht dargestellten elektrische Steuerung zuzuführen.

Figur 2 zeigt schematisch ein Verfahren zum Detektieren von Ausdehnungsabweichungen 16. In einem ersten Arbeitsschritt erfolgt das Bereitstellen 18 des bedruckten Dekorpapiers 4 auf dem Probentisch 2. Danach erfolgt in einem weiteren Verfahrensschritt das Projizieren 20 der Soll-Vorlage auf den Probentisch 2 und das bedruckte Dekorpapier 4. Ein Abstand zwischen zwei Elementen der Soll-Vorlage, den sogenannten Vorlagenelementen entspricht dabei einem Soll-Abstand zwischen zwei vorbestimmten Dekorelementen des Dekors, mit dem das bedruckte Dekorpapier 4 bedruckt ist. Nachdem beispielsweise mittels der Kamera 14 sowohl die Soll-Vorlage als auch das Dekor des Dekorpapiers 4 erfasst wurde, erfolgt in einem weiteren Arbeitsschritt das Bestimmen 22 von Abweichungen.

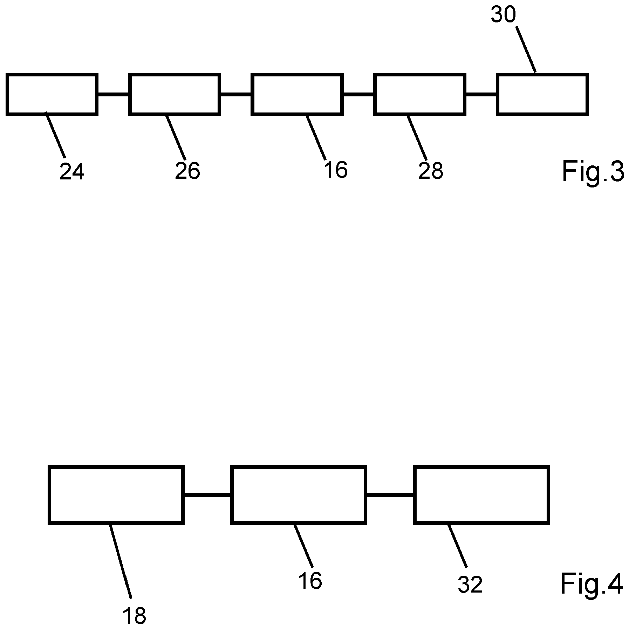

Figur 3 zeigt ein Verfahren zum Herstellen von Dekorpapieren 4. In einem ersten Arbeitsschritt erfolgt das Bereitstellen 24 eines unbedruckten Rohpapiers. Anschließend erfolgt das Bedruckten 26 des unbedruckten Rohpapiers bevor dann das Verfahren zum Detektieren von Ausdehnungsabweichungen 16 ausgeführt wird, wie es beispielsweise in Figur 2 dargestellt ist. Anschließend erfolgt das Bestimmen 28 sowie das Umsetzen 30 wenigstens einer Korrekturmaßnahme.

Figur 4 zeigt ein weiteres Verfahren, in dem nun bedruckte Dekorpapiere 4 verarbeitet werden. Im ersten Arbeitsschritt erfolgt wieder das Bereitstellen 18 eines bedruckten Dekorpapiers 4, bevor wieder das Verfahren zum Detektieren von Ausdehnungsabweichungen 16 durchgeführt wird. Nachdem die Abweichungen bestimmt und gegebenenfalls Korrekturmaßnahmen durchgeführt wurden, wird das bedruckte Dekorpapier 4 dem Verarbeiten 32 in wenigstens einem weiteren Arbeitsschritt zugeführt.

### Bezugszeichenliste:

2 Probentisch
4 Dekorpapier
6 Höhenverstellung
8 Projektor
10 Höhenverstellung
12 Strahlkegel
14 Kamera
16 Verfahren zum Detektieren von Ausdehnungsabweichungen
18 Bereitstellen
20 Projizieren
22 Bestimmen
24 Bereitstellen
26 Bedruckten
28 Bestimmen
30 Umsetzen
32 Verarbeiten

## Patentansprüche

1. Verfahren zum Detektieren von Ausdehnungsabweichungen von Dekoren auf bedruckten Dekorpapieren, wobei das Verfahren folgende Schritte aufweist:
- Bereitstellen des bedruckten Dekorpapiers auf einem Probentisch,
- Projizieren einer Soll-Vorlage auf den Probentisch und das bedruckte Dekorpapier derart, dass ein Abstand zwischen wenigstens zwei vorbestimmten Vorlagenelementen der projizierten Soll-Vorlage einem Soll-Abstand zwischen wenigstens zwei vorbestimmten Dekorelementen des Dekors entspricht,
- Bestimmen von Abweichungen zwischen dem Ist-Abstand der Dekorelemente und dem Abstand zwischen den projizierten Vorlagenelementen.

2. Verfahren nach Anspruch 1, **dadurch gekennzeichnet, dass** ein Soll-Abstand der Soll-Breite des Dekors und/oder ein Soll-Abstand der Länge des Dekors entspricht.

3. Verfahren nach Anspruch 1 oder 2, **dadurch gekennzeichnet, dass** ein Soll-Abstand dem Abstand zweier Linien des Dekors entspricht.

4. Verfahren nach einem der vorstehenden Ansprüche, **dadurch gekennzeichnet, dass** die Vorlagenelemente Linien beinhalten, die als Lichtlinien auf das Dekorpapier projiziert werden.

5. Verfahren nach einem der vorstehenden Ansprüche, **dadurch gekennzeichnet, dass** die Soll-Vorlage wenigstens einen Teil des Dekors, bevorzugt das ganze Dekor beinhaltet.

6. Verfahren zum Herstellen von Dekorpapieren mit einem Dekor, wobei das Verfahren folgende Schritte aufweist:
- Bereitstellen eines unbedruckten Roh-Papiers,
- Bedrucken des Roh-Papiers mit dem Dekor,
- Detektieren von Ausdehnungsabweichungen des gedruckten Dekores mittels eines Verfahrens gemäß einem der vorstehenden Ansprüche,
- Bestimmen wenigstens einer Korrekturmaßnahme wenn die detektierte Abweichung größer als ein vorbestimmter Grenzwert ist
- Umsetzen der wenigstens einen Korrekturmaßnahme und Wiederholen der Verfahrensschritte

7. Verfahren zum Verarbeiten eines bedruckten Dekorpapiers, wobei das Verfahren folgende Schritte aufweist:
- Bereitstellen eines Dekorpapiers, das mit einem Dekor bedruckt ist,
- Detektieren von Ausdehnungsabweichungen des gedruckten Dekores mittels eines Verfahrens gemäß einem der vorstehenden Ansprüche1 bis 5,
- Verarbeiten des bedruckten Dekorpapiers mit wenigstens einem weiteren Arbeitsschritt in Abhängigkeit der detektierten Ausdehnungsabweichungen.

8. Verfahren nach Anspruch 7, **dadurch gekennzeichnet, dass** der wenigstens eine weitere Arbeitsschritt in Abhängigkeit der detektierten Abweichungen ausgewählt wird und/oder dadurch, dass Arbeitsparameter in dem Arbeitsschritt in Abhängigkeit der detektierten Abweichungen gewählt werden.

9. Vorrichtung zum Durchführen eines Verfahrens nach einem der vorstehenden Ansprüche, wobei die Vorrichtung wenigstens einen Probentisch und wenigstens einen Projektor zum Projizieren der Soll-Vorlage auf den Probentisch aufweist.

10. Vorrichtung nach Anspruch 9, **dadurch gekennzeichnet, dass** die Vorrichtung wenigstens einen optischen Sensor, vorzugsweise eine Kamera aufweist, die eingerichtet ist, die auf den Probentisch projizierte Soll-Vorlage und wenigstens einen Teil des Dekors eines auf dem Probentisch liegenden Dekorpapiers zu erfassen.

11. Vorrichtung nach Anspruch 10, **dadurch gekennzeichnet, dass** die Vorrichtung eine elektrische Steuerung, vorzugsweise eine elektronische Datenverarbeitungseinrichtung, aufweist, die eingerichtet ist, Daten des wenigstens einen optischen Sensors, bevorzugt der Kamera, auszuwerten und die Abweichungen zu bestimmen.

12. Vorrichtung nach Anspruch 11, **dadurch gekennzeichnet, dass** die elektrische Steuerung eingerichtet ist, ein Signal, insbesondere ein optisches und/oder akustisches Signal auszusenden, wenn die bestimmten Abweichungen ein vorbestimmtes Maß überschreiten.

13. Vorrichtung nach Anspruch 11 oder 12, **dadurch gekennzeichnet, dass** die elektrische Steuerung eingerichtet ist, die bestimmten Abweichungen auf einer Anzeigeeinrichtung auszugeben, in einem elektronischen Datenspeicher zu speichern und/oder an eine andere elektrische Steuerung zu übermitteln.

14. Vorrichtung nach einem der Ansprüche 9 bis 11, **dadurch gekennzeichnet, dass** der wenigstens eine Projektor derart angeordnet ist, dass der die Soll-Vorlage in einer Richtung senkrecht zu dem Probentisch projiziert.

15. Vorrichtung nach einem der Ansprüche 9 bis 12, **dadurch gekennzeichnet, dass** der wenigstens eine Projektor relativ zu dem Probentisch verschiebbar, vorzugsweise senkrecht zu dem Probentisch verschiebbar, angeordnet ist.

## Geänderte Patentansprüche

### Geänderte Patentansprüche gemäss Regel 137(2) EPÜ.

1. Verfahren zum Detektieren von Ausdehnungsabweichungen von Dekoren auf bedruckten Dekorpapieren, wobei das Verfahren folgende Schritte aufweist:
- Bereitstellen des bedruckten Dekorpapiers auf einem Probentisch,
- Projizieren einer Soll-Vorlage auf den Probentisch und das bedruckte Dekorpapier derart, dass ein Abstand zwischen wenigstens zwei vorbestimmten Vorlagenelementen der projizierten Soll-Vorlage einem Soll-Abstand zwischen wenigstens zwei vorbestimmten Dekorelementen des Dekors entspricht,
- Bestimmen von Abweichungen zwischen dem Ist-Abstand der Dekorelemente und dem Abstand zwischen den projizierten Vorlagenelementen.

2. Verfahren nach Anspruch 1, **dadurch gekennzeichnet, dass** ein Soll-Abstand der Soll-Breite des Dekors und/oder ein Soll-Abstand der Länge des Dekors entspricht.

3. Verfahren nach Anspruch 1 oder 2, **dadurch gekennzeichnet, dass** ein Soll-Abstand dem Abstand zweier Linien des Dekors entspricht.

4. Verfahren nach einem der vorstehenden Ansprüche, **dadurch gekennzeichnet, dass** die Vorlagenelemente Linien beinhalten, die als Lichtlinien auf das Dekorpapier projiziert werden.

5. Verfahren nach einem der vorstehenden Ansprüche, **dadurch gekennzeichnet, dass** die Soll-Vorlage wenigstens einen Teil des Dekors, bevorzugt das ganze Dekor beinhaltet.

6. Verfahren nach einem der vorstehenden Ansprüche, wobei vor dem Bereitstellen des bedruckten Dekorpapiers ein unbedrucktes Roh-Papier bereitgestellt und mit dem Dekor bedruckt wird und wobei nach dem Bestimmen von Abweichungen wenigstens eine Korrekturmaßnahme bestimmt wird, wenn die detektierte Abweichung größer als ein vorbestimmter Grenzwert ist, wobei die Korrekturmaßnahme dann umgesetzt und die Verfahrensschritte wiederholt werden.

7. Verfahren nach einem der Ansprüche 1 bis 5, **dadurch gekennzeichnet, dass** zunächst ein Dekorpapier bereitgestellt wird, das mit einem Dekor bedruckt ist, wobei nach dem Bestimmen der Abweichungen das bedruckte Dekorpapier mit wenigstens einem weiteren Arbeitsschritt in Abhängigkeit der detektierten Ausdehnungsabweichungen verarbeitet wird.

8. Verfahren nach Anspruch 7, **dadurch gekennzeichnet, dass** der wenigstens eine weitere Arbeitsschritt in Abhängigkeit der detektierten Abweichungen ausgewählt wird und/oder dadurch, dass Arbeitsparameter in dem Arbeitsschritt in Abhängigkeit der detektierten Abweichungen gewählt werden.

9. Vorrichtung zum Durchführen eines Verfahrens nach einem der vorstehenden Ansprüche, wobei die Vorrichtung wenigstens einen Probentisch und wenigstens einen Projektor zum Projizieren der Soll-Vorlage auf den Probentisch aufweist.

10. Vorrichtung nach Anspruch 9, **dadurch gekennzeichnet, dass** die Vorrichtung wenigstens einen optischen Sensor, vorzugsweise eine Kamera aufweist, die eingerichtet ist, die auf den Probentisch projizierte Soll-Vorlage und wenigstens einen Teil des Dekors eines auf dem Probentisch liegenden Dekorpapiers zu erfassen.

11. Vorrichtung nach Anspruch 10, **dadurch gekennzeichnet, dass** die Vorrichtung eine elektrische Steuerung, vorzugsweise eine elektronische Datenverarbeitungseinrichtung, aufweist, die eingerichtet ist, Daten des wenigstens einen optischen Sensors, bevorzugt der Kamera, auszuwerten und die Abweichungen zu bestimmen.

12. Vorrichtung nach Anspruch 11, **dadurch gekennzeichnet, dass** die elektrische Steuerung eingerichtet ist, ein Signal, insbesondere ein optisches und/oder akustisches Signal auszusenden, wenn die bestimmten Abweichungen ein vorbestimmtes Maß überschreiten.

13. Vorrichtung nach Anspruch 11 oder 12, **dadurch gekennzeichnet, dass** die elektrische Steuerung eingerichtet ist, die bestimmten Abweichungen auf einer Anzeigeeinrichtung auszugeben, in einem elektronischen Datenspeicher zu speichern und/oder an eine andere elektrische Steuerung zu übermitteln.

14. Vorrichtung nach einem der Ansprüche 9 bis 11, **dadurch gekennzeichnet, dass** der wenigstens eine Projektor derart angeordnet ist, dass der die Soll-Vorlage in einer Richtung senkrecht zu dem Probentisch projiziert.

15. Vorrichtung nach einem der Ansprüche 9 bis 12, **dadurch gekennzeichnet, dass** der wenigstens eine Projektor relativ zu dem Probentisch verschiebbar, vorzugsweise senkrecht zu dem Probentisch verschiebbar, angeordnet ist.
